# EUROPEAN PATENT APPLICATION

(11) **EP 4 431 230 A1**
(43) Date of publication of application: **18.09.2024**
(21) Application number: 23162634.2
(22) Date of filing: 17.03.2023
(51) Int. Cl.: B23Q 39/02, B23B 3/06, B23Q 39/00

(54) **MACHINE TOOL, IN PARTICULAR A LATHE, AND METHOD FOR MACHINING WORKPIECES USING A MACHINE TOOL**

(71) Applicant: DMG MORI Bergamo S.r.l., 24030 Brembate di Sopra (BG) (IT)
(72) Inventor: PASSERINI, Mirko, 20083 Gaggiano (IT); MILESI, Luca, 24015 San Giovanni Bianco (IT); CHIAPPA, Claudio, 24030 Villa d´Adda (BG) (IT)
(74) Representative: MERH-IP Matias Erny Reichl Hoffmann Patentanwälte PartG mbB

(57) **Abstract**

The present application relates to a machine tool, in particular a lathe or a turn mill machine, having at least one work spindle provided to receive a workpiece, and a first and second milling unit being configured to jointly machine the workpiece received by the at least one work spindle. Two or more or preferably each tool carrier assembly accommodated by the upper and lower tool carrier support portions and each preferably having a milling unit, is configured to independently move a tool carried thereon in one or more linear directions.

## Description

The present application relates to a machine tool, in particular a lathe or a turn mill machine, having at least one work spindle provided to receive a workpiece, and a first and second milling unit being configured to jointly machine the workpiece received by the at least one work spindle.

### Background

Machine tools of a generic type, such as for example a lathe or turret lathe, typically comprises a machine frame that may be provided with at least two rotatably mounted work spindles which face each other and have parallel or coaxial spindle axes, wherein the spindles can receive workpieces which are machined on the machine tool. In order to provide the tools for machining (machining units), tool carriers are supplied which are usually made available on movable tool carrier slides, which are arranged at the machine frame and can be moved by means of one or more linear axes relative to the work spindles.

Such machine tools are known, for example, from EP 3 616 832 A1. The subject matter of this application is hereby incorporated by reference.

In general, machine tools of this type require that the machine tool be provided so as to enable efficient machining of the workpieces with the largest possible number of tools usable at the same time. In this regard, there is a need to further improve the structure of the machine tools described above in terms of efficiency and flexibility. In particular, lathes or turn mill machines usually include one milling unit movable in more than one axis relative to the work spindles. However, the integration of a second milling unit in a machine tool of this type leads to challenges regarding the height of the machine tool and the accessibility of the machining area by a processor or operator. In particular, the height to the machine axis, which is measured from the workshop floor to the spindle axis of the e.g. main spindle must be considered for the accessibility. Since usually the base unit of a milling head has a carrying portion having a columnar shape for providing a large x-stroke a certain installation space is necessary. This may lead to an increased height to the machine axis leading to reduced accessibility.

It is an object of the invention to improve a machine tool of the generic type so as to enable more efficient machining of the workpieces with the largest possible number of tools usable at the same time, if possible, with the highest possible degree of flexibility as regards the control of the relative movements between the tools and the tools received in the work spindles. A particular object of the invention is to provide an efficient and flexible machine tool, in particular a lathe or turn mill machine, having a compact and cost-effective yet rigid design with a machining area which can be accessed in the best possible way by the processor or operator of the machine tool.

### Summary

The above-mentioned object is solved by the subject matter of independent claim 1. Further preferred embodiments are described by the dependent claims.

It is provided a machine tool, in particular a lathe or a turn mill machine, which comprises a machine frame having an upper tool carrier support portion and a lower tool carrier support portion, one or each of the upper tool carrier support portion (in some cases "upper" may be defined as vertically above the machine axis (spindle axis) of the main spindle and/or auxiliary spindle) and the lower tool carrier support portion (in some cases "lower" may be defined as vertically below the machine axis of the main spindle and/or auxiliary spindle) accommodating at least one linear movable tool carrier assembly further configured to carry a milling unit (milling head). The linear movable tool carrier assemblies may also be configured to carry other types of machining units (machining heads), such as turrets, grinding wheel, gear hobbing devices etc.. In a further example the milling head on the upper tool carrier support portion may be arranged to oppose the milling head on the lower tool carrier support portion, with the machine axis of the main spindle and/or working spindle in between.

A first milling unit of the machine tool is arranged (in particular directly) on a tool carrier assembly of the upper tool carrier support portion, and a second milling unit is arranged (in particular directly) on a tool carrier assembly of the lower tool carrier support portion. This means that the machine tool has a milling unit on both its upper tool carrier support portion and its lower tool carrier support portion, each milling unit mounted on a tool carrier assembly.

Furthermore, the machine tool comprises at least one work spindle provided to receive a workpiece. The first and the second milling units are configured to, preferably jointly, machine the workpiece received by the at least one work spindle. In one advantageous example the workpiece of a main spindle and/or an auxiliary spindle may be machined by a tool mounted in the first milling unit and a tool mounted in the second milling unit sequentially or more preferably in parallel i.e. at the same time. In this context, the at least one work spindle may be arranged such that a single workpiece received thereby can be reached by the first and the second milling units for machining. For example, the at least one spindle may be arranged adjacent to the first and the second milling units such that e.g. their milling cutters can machine a workpiece received by the spindle on different, e.g., opposite sides, preferably at the same time. Furthermore, a plurality of work spindles may be provided at the machine tool, each of them configured to receive a workpiece, which can be jointly machined by the first and the second milling units.

The expression "jointly machine the workpiece" shall mean that both the first and the second milling units can machine a workpiece mounted on the spindle during one machining pass, in particular simultaneously. This allows for increasing the chip volume and reducing the time needed for an operation. Since milling accounts for a large part of the production process on a turn-mill machine, the use of two milling units can significantly shorten the production time and, thus, improve the efficiency of the machine tool.

According to an embodiment, two or more or preferably each tool carrier assembly accommodated by the upper and lower tool carrier support portions may independently move a tool carried thereon in one or more linear directions. Preferably, each of the tool carriers may have/carry a milling unit, and most preferably at least one of the tool carriers accommodated by the upper tool carrier support portion and at least one of the tool carriers accommodated by the lower tool carrier support portion may have/carry a milling unit. The further tool carriers may be equipped with other types of tools/machining units, such as turrets, grinding wheel, gear hobbing devices, etc., which can be mounted onto each tool carrier not having a milling unit.

In a further non-limiting example, the machine tool includes at least two (e.g. first and second (upper) tool carrier assembly) tool carrier assemblies on the upper tool carrier support portion and at least two (e.g. first and second (lower) tool carrier assembly) tool carrier assemblies on the lower tool carrier support portion, with the machine axis (spindle axis) of the main spindle and/or working spindle in between the upper and lower upper and lower tool carrier support portions. The first upper tool carrier assembly is thereby arranged to directly opposed the first lower tool carrier assembly and the second upper tool carrier assembly is arranged to directly oppose the second lower tool carrier assembly. In one example, preferably the first milling head is installed on the first upper tool carrier assembly and the second milling head is arranged on the second lower tool carrier assembly so that the milling head are not directly opposing each other (the milling heads and/or cutting tools thereof are therefore installed to be horizontally displaced relative to each other), for efficient machining, reduced milling head containment and optimized chip removal.

The one or more linear directions may include at least one of a Z-axis direction extending horizontally in a direction parallel to a main extending direction of the machine frame, an X-axis direction extending vertically in a direction perpendicular to the main extending direction of the machine frame, and a Y-axis direction extending horizontally in a direction transverse to the main extending direction of the machine frame. This means, that both the first milling unit arranged on the upper tool carrier support portion and the second milling unit arranged on the lower tool carrier support portion can be moved linearly throughout an entire machining area of the machine tool.

Moreover, the machine tool, may be in particular a lathe, comprising a machine frame having an upper tool carrier support portion and a lower tool carrier support portion, each of the upper tool carrier support portion and the lower tool carrier support portion accommodating at least one (preferably two or more) linear movable tool carrier assembly configured to carry a milling unit; a first milling unit arranged on a tool carrier assembly of the upper tool carrier support portion; a second milling unit arranged on a tool carrier assembly of the lower tool carrier support portion; wherein at least one work spindle provided to receive a workpiece; wherein the first and the second milling units are configured to machine the workpiece received by the at least one work spindle in parallel or sequentially. Preferably, the main spindle is mounted on the upper tool carrier support portion and the auxiliary spindle is mounted on the lower tool carrier support portion. Such a specific configuration achieved exceptionally efficient machining results and at the same time the vertical machine dimension (height of the machine tool) can be keep small thereby facilitating the installation of the machine in the shopfloor.

The machine tool, in particular a lathe, may further comprise a machine frame having an upper tool carrier support portion, a lower tool carrier support portion and a spindle carrier portion arranged between the upper and lower tool carrier support portions, a spindle carrier, being arranged on or at a height of the spindle carrier portion of the machine frame, supporting a main spindle configured to receive a workpiece, the main spindle having a horizontally arranged spindle axis, one or more tool carriers, each tool carrier being supported on a tool carrier assembly being arranged on either the upper tool carrier support portion or the lower tool carrier support portion of the machine frame, wherein a lower side-surface of the lower tool carrier support portion, to which the one or more tool carriers are mountable, is arranged to have an overhanging inclination. Each carrier support portion and carrier portion is configured to preferably receive a turret unit.

Moreover, the lower side-surface of the lower tool carrier support portion may be inclined at an overhanging inclination angle in the range between 300 and 330 degrees, in particular at substantially 315 degrees.

The machine tool may be configured such that one or more or each tool carrier assembly is configured to independently move the respective tool carrier in one or more linear directions, including at least one of a Z-axis movement direction for moving the tool carrier horizontally in a direction in parallel to the spindle axis of the main spindle, an X-axis movement direction for moving the tool carrier radially with respect to the spindle axis of the main spindle, and a Y-axis movement direction for moving the tool carrier in a direction perpendicular to the spindle axis of the main spindle and perpendicular to the X-axis movement of the main spindle.

Moreover, a method for machining workpieces is suggested, using a machine tool with a first and second milling unit of any of the described aspects comprising the step of jointly machine the workpiece received by the at least one spindle and/or pivoting at least one tool carrier about a B-axis to achieve a b-axis movement.

The machining method preferably further includes the step of clamping the workpiece to be processed into the main spindle and machine the clamped workpiece by the first and second milling units.

The method according to any of the previous aspects, wherein the machining method is configured to simultaneously machine at least two workpieces, at least one workpiece accommodated in the auxiliary spindle and one workpiece preferably accommodated in the main spindle.

According to a further development, one or more or each of the tool carrier assemblies accommodated by the upper and lower tool carrier support portions may rotate a tool carried thereon about a B-axis extending transversely to the main extending direction of the machine frame along or in parallel to the Y-axis. In other words, both the first milling unit arranged on the upper tool carrier support portion and the second milling unit arranged on the lower tool carrier support portion can be rotated about the B-axis of its tool carrier assembly, to provide a further degree of freedom increasing the flexibility of the machine tool. It is clear that the foregoing applies equally to any other tool mounted on a tool carrier assembly of the upper and lower tool carrier support portions.

According to a further development, the at least one work spindle may be arranged directly on at least one of the at least two tool carrier assemblies of the upper tool carrier support portion or the lower tool carrier support portion to be movable with the tool carrier assembly. This means, that the at least one work spindle is not only moveable in Z-axis direction, as known from machine tools of this type, but can be moved linearly throughout the entire machining area of the machine tool.

Furthermore, the at least one work spindle can be rotated around a B-axis of the tool carrier assembly on which it is mounted/ disposed. Thus, it can be flexibly arranged relative to the first and the second milling units to allow the latter to jointly machine a received workpiece, in particular at the same time. Furthermore, the arrangement of the at least one work spindle on a tool carrier assembly also allows a special support portion for accommodating the work spindles on the machine tool to be omitted. Therefore, a traverse path of the tool carrier assemblies, especially in X-axis direction, can be reduced and a compact machine frame with a high accessibility of the machining area can be provided.

In particular, a first work spindle may be arranged on a first tool carrier assembly accommodated by the upper tool carrier support portion and a second work spindle, may be arranged on a second tool carrier assembly accommodated by the lower tool carrier support portion. Preferably, the first work spindle may be used as a main spindle and the second work spindle may be used as a counter spindle. In this case, the tool carrier assemblies, on which the first and the second work spindles are arranged, may be linearly moved, and if necessary, also rotated such that the first and the second work spindles are disposed opposite to each other.

In particular, the tool carrier assemblies of the first and the second work spindles may be disposed such that a spindle axis of the second work spindle is arranged coaxially to a spindle axis of the first work spindle. Due to the high mobility of the tool carrier assemblies, it is easy to arrange the two work spindles as main and counter spindles.

However, it may be also possible to use the first and the second work spindles independently of each other. For example, a first workpiece may be picked up by the first work spindle, a second work piece by the second work spindle, and the first and the second milling unit may jointly perform machining steps on both workpieces.

According to an alternative embodiment, the machine frame may have a spindle support portion arranged between the upper and the lower tool carrier support portions. The spindle support portion may accommodate at least one spindle carrier on which the at least one work spindle may be arranged. Thus, in this embodiment, the at least one work spindle may not be disposed on a tool carrier assembly of the upper and/or lower tool carrier support portion as described above, but the at least one work spindle may be disposed on a spindle carrier of a spindle support portion provided therefor. This has the advantage that the tool carrier assemblies of the upper and lower tool carrier portions are reserved for the first and the second milling units and additional tools/machining units supporting the latter.

According to a further development, the tool carrier assembly on which the first milling unit may be arranged may rotate the first milling unit about a first B-axis extending transversely to the main extending direction of the machine frame, and the tool carrier assembly on which the second milling unit may be arranged may rotate the second milling unit about a second B-axis extending transversely to the main extending direction of the machine frame. In this context, the first and the second B-axes may be arranged so as to not intersect with a rotation axis of the respective milling unit. In other words, each of the first and the second milling units may rotate about the corresponding B-axis on a radius distant from the latter. For example, the milling unit may be installed to pivot about an axis which may be an axis in the Y-direction (e.g. B-axis) and wherein the milling unit is mounted in a predetermined distance to said axis so that the milling unit is installed eccentric. In this way, a rotation of a tool carrier assembly about its B axis simultaneously moves the latter (in particular the center of the milling unit) in the direction of the X axis. Therefore, a traverse path in X-axis direction of the tool carrier assemblies, on which the first and the second milling units are disposed, can be reduced. Hence, providing tool carrier assemblies having a B-axis which does not intersect with a rotation axis of a milling unit mounted thereon also allows for realizing a compact machine frame with a high accessibility of the machining area.

In a particular advantageous example, the milling unit arranged on the upper tool carrier assembly is arranged centric to the B-axis (of the upper tool carrier assembly on which said milling unit is installed) and the milling unit arranged on the lower tool carrier assembly is arranged eccentric to the B-axis (of the lower tool carrier assembly on which said milling unit is installed). Accordingly, highly efficient machining becomes possible and at the same time the height of the machine axis can be kept at a minimum so that improved access can be assured.

In particular, the first B-axis may be arranged at a first predetermined distance from the rotation axis of the first milling unit, and the second B-axis may be arranged at a second predetermined distance from the rotation axis of the second milling unit. In other words, the first milling unit may rotate about the first B-axis on a first radius having the first predetermined distance to the first B-axis, and the second milling unit may rotate about the second B-axis on a second radius having the second predetermined distance to the second B-axis. Preferably, the first and the second predetermined distance may be equal. However, it may be also possible that the first predetermined distance is smaller than the second predetermined distance and vice versa.

According to a further development, at least one turret and/or at least one further milling unit may be arranged on at least one of the at least two tool carrier assemblies of the upper tool carrier support portion or the lower tool carrier support portion. As described above, providing the at least one work spindle on a spindle support portion with its own spindle carrier has the advantage that the tool carrier assemblies of the upper and lower tool carrier support portions are reserved for the machining units. Hence, it is possible to support the first and the second milling tool by turrets and additional milling tools.

According to a further development, the at least one work spindle may have a horizontally arranged spindle axis. This may be the case, if the work spindle is arranged on a spindle carrier accommodated by the spindle support portion. The at least one spindle carrier may move the at least one work spindle in a Z-axis direction extending horizontally in a direction parallel to the main extending direction of the machine frame. Preferably, the at least one spindle may be combined not only with the first and the second milling units but also with additional turrets and/or milling tools arranged on tool carrier assemblies of the upper and lower tool carrier support portions. Due to the high mobility of said tool carrier assemblies, it is sufficient to move the at least one spindle only in the Z-axis direction.

According to a further development, a main spindle and a counter spindle may each be arranged on a spindle carrier accommodated by the spindle support portion, wherein the main spindle and the counter spindle may face each other. The main spindle and the counter spindle both may be configured to receive a work piece. In particular, a work piece may first be received by the main spindle for machining its outer surfaces/outer contours, and then the counter spindle may be moved towards the main spindle for taking over the workpiece, e.g., in order to machine the rear ends thereof.

According to a further development, the main spindle and the counter spindle may each have a horizontally arranged spindle axis, wherein the axis of the counter spindle may be arranged coaxially with the spindle axis of the main spindle. This allows precise machining of a workpiece on the main and counter spindles without having to adjust the counter spindle, e.g., in the X-axis direction after taking over the workpiece.

In a further advantageous example, a first tool holder magazine is arranged in parallel and preferably at the same vertical distance to the workshop floor (i.e. at the same height) as the milling unit installed on the upper tool carrier assembly and at the same time a second tool holder magazine is arranged in parallel and preferably at the same height as the milling unit installed on the lower tool carrier assembly. Accordingly, highly efficient and independent machining using the separate milling units with separate tool holder magazines becomes possible and at the same time the height of the machine axis can be kept at a minimum so that improved access can be assured. In a further development, for further improving the access and independence, the first tool holder magazine is arranged in the proximity (for example vertically above) of the main spindle and the second tool holder magazine is arranged in the proximity (for example vertically below) of the auxiliary spindle (e.g. the first and second tool holder magazines may be arranged so as not to face each other).

Summarizing, the machine tool according to the invention provides a compact design, particularly in the vertical direction, with a good accessibility of the machining area for a processor or operator, and allows for more efficient machining of workpieces through the simultaneous use of two milling units, each arranged on a tool carrier assembly of an upper and lower tool carrier portion.

### Brief description of the figures

Fig. 1: exemplary shows an arrangement of work spindles and milling units according to an exemplary embodiment of the invention;
Fig. 2: exemplarily shows a schematic perspective view of a machine tool with the arrangement of spindles and milling units depicted in Fig. 1;
Fig.3: exemplarily shows a schematic perspective view of a machine frame of the machine tool of Fig. 2;
Fig. 4: exemplarily shows an arrangement of work spindles and milling units according to another exemplary embodiment of the invention;
Fig. 5: exemplarily shows a machine tool on which the arrangement of spindles and milling depicted in Fig. 4 can be applied;
Fig. 6: exemplarily shows a schematic perspective view of a machine frame of the machine tool of Fig. 5
Fig. 7a and 7b: exemplary show a comparison between a required traverse path in X-axis direction of a conventional milling unit and the milling unit shown in Fig. 4; and
Fig. 8 exemplarily shows an arrangement of work spindles and milling units according to yet one another exemplary embodiment of the invention.

### Detailed description of preferred examples

In the following, examples of the present invention are described in detail with reference to exemplary figures. The features of the examples may be combined in whole or in part and the present invention is not limited to the described examples. In the figures, identical elements are provided with identical reference signs, so that a repeated description of the elements is omitted unless necessary.

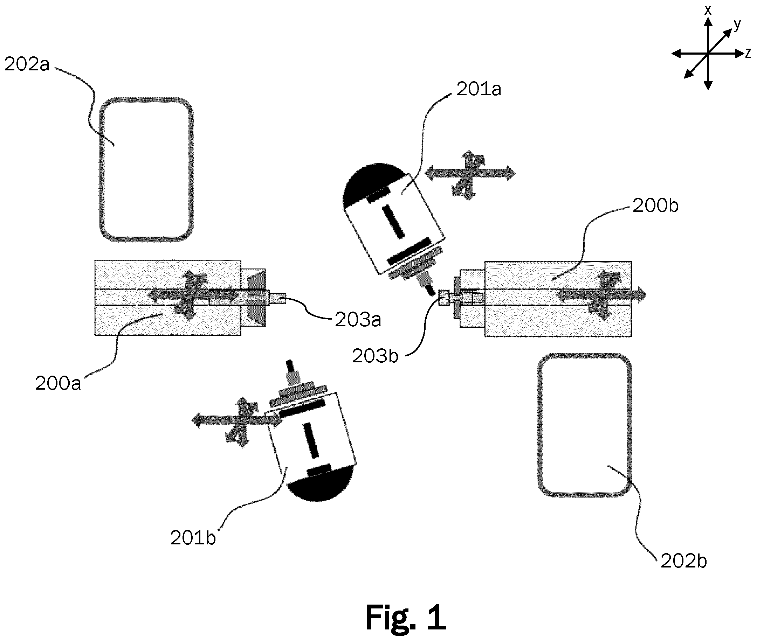

Fig. 1 exemplary shows an arrangement of work spindles and milling units according to an exemplary embodiment of the invention. Specifically, the depicted arrangement includes a first work spindle 200a and a second work spindle 200b being arranged opposite to each other as well as a first milling unit 201a and a second milling unit 201b. The first work spindle 200a depicted on the left side of Fig. 1 may serve as a main spindle and the second work spindle 200b depicted on the right side of Fig. 1 may serve as a counter spindle. However, it is also possible that the two work spindles 200a, 200b represent two independent work spindles, each provided to receive a workpiece to be machined by the first and the second milling unit 201a, 201b. The bold arrows attached to the depicted work spindles 200a, 200b and milling units 201a, 201b and pointing in the three spatial directions indicate that each of said elements can be linearly moved throughout the entire machining area. The associated coordinate system is shown at the top of Fig. 1. Further-more, each work spindle 200a, 200b and each milling unit 201a, 201b can be rotated about its B-axis (not depicted in detail).

In the depicted example, the first milling tool 201a is disposed above the second spindle 200b and the second milling tool is disposed below the first spindle 200a. In addition, a first tool holder magazine 202a is arranged above the first spindle 200a, and a second tool holder magazine 202b is arranged below the second spindle 200b.

Furthermore, it is indicated in Fig. 1 that the first milling unit 201a machines a second workpiece 203b received by the second work spindle 200b, whereas the second milling unit 201b is on the way to machine a first workpiece 203a received by the first work spindle 200a. However, by moving the first and the second milling units 201a, 201b in the Z-axis direction, it is also possible that the first milling unit 201a machines the first workpiece 203a received by the first work spindle 200a and that the second milling unit 201b machines the second work piece 203b received by the second work spindle 200b. It can also be inferred from Fig. 1 that both milling units 201a, 201b are capable of jointly machining both the first workpiece 203a and the second workpiece 203b.

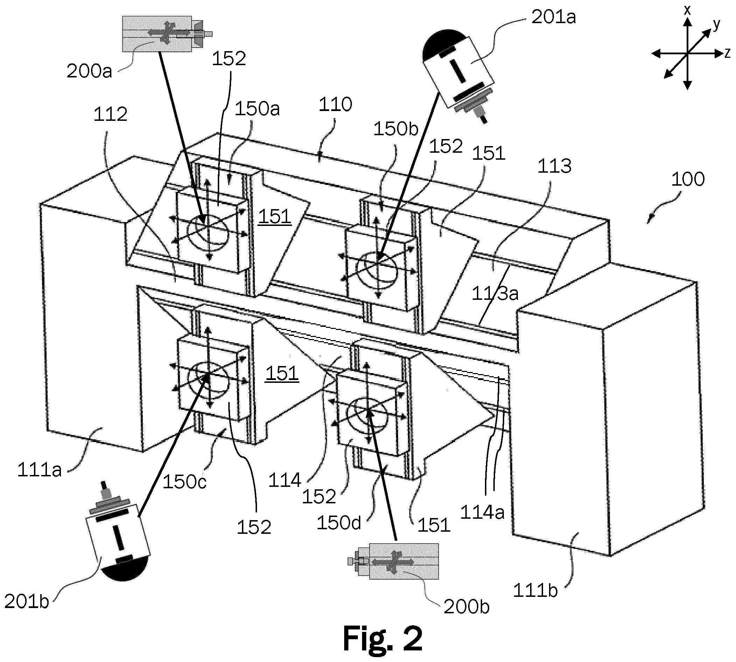

Fig. 2 exemplarily shows a schematic perspective view of a machine tool 100 with the arrangement of spindles and milling units depicted in Fig. 1. The depicted machine tool 100, exemplarily realized as a turn mill machine, comprises a machine frame 110 supporting four tool carrier assemblies 150a - 150d. The respective axes along which each tool carrier assembly 150a - 150d can be linearly moved in the X-, Y- and Z-axis directions are indicated by doubled arrows. Moreover, a tool/machining unit mounted on/to one of the tool carriers 150a - 150d can be rotated about its B axis (not shown in detail). This means that the respective machine tool can be rotated about the Y-axis. The associated coordinate system is shown at the top of Fig. 2.

In the example depicted in Fig. 2, the first work spindle 200a is assigned to a first tool carrier assembly 150a and the first milling unit 201a is assigned to a second tool carrier assembly 150b (indicated by the respective arrows), wherein the first and the second tool carrier assemblies 150a, 150b are arranged on an upper tool carrier support portion 113 of the machine frame 110. Accordingly, the second milling unit 201b is assigned to a third tool carrier assembly 150c and the second work spindle 200b is assigned to a fourth third tool carrier assembly 150d (also indicated by the respective arrows), wherein the third and the fourth tool carrier assemblies 150c, 150d are arranged on a lower tool carrier support portion 114 of the machine frame 110.

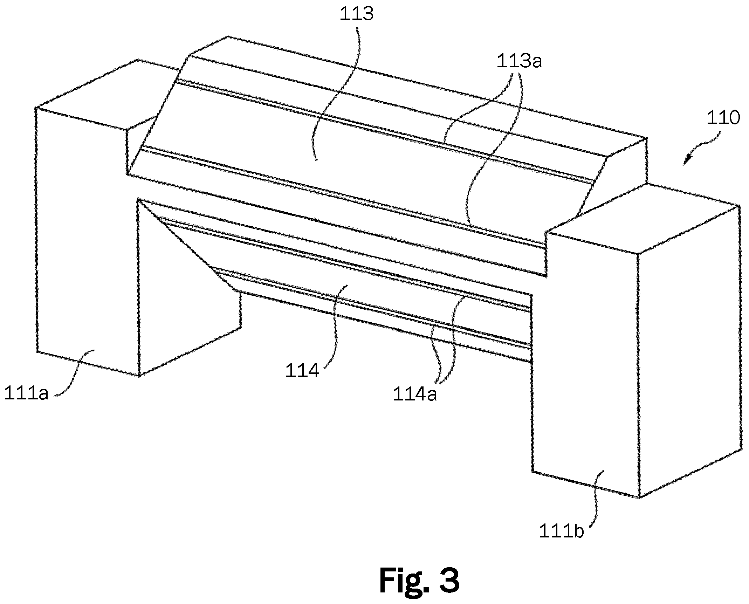

Fig. 3 exemplarily shows a schematic perspective view of the machine frame 110 of the machine tool 100 of Fig. 2. The machine frame 110 depicted in the figure stands on two machine stand portions 111a and 111b, and a carrier support portion of the machine frame 110 is formed in between and held by the machine stand portions 111a and 111b. The depicted machine frame 110 includes the upper tool carrier support portion 113 and a lower tool carrier support portion 114, both of which horizontally extending between the two machine stand portions 111a and 111b. The upper side surface of the upper tool carrier support portion 113 of the machine frame 110 is arranged at an inclined slope, and the lower side surface of the lower tool carrier support portion 114 of the machine frame 110 is arranged at an overhanging inclined slope.

For slidably supporting the tool carrier assemblies 150a, 150b on the upper side of the machine frame 110 in a machining area of the machine tool 100, the upper tool carrier support portion 113 of the machine frame 110 has horizontally extending guides 113a. Accordingly, for slidably supporting the tool carrier assemblies 150c, 150d on the lower side of the machine frame 110 in a machining area of the machine tool 100, the lower tool carrier support portion 114 of the machine frame 110 has horizontally extending guides 114a.

As shown in Fig. 2, each tool carrier assembly 150a - 150d includes a carrier support slide 151 which is configured to be slidably mounted to the guides 113a or 114a of the upper and lower tool carrier support portions 113 or 114 of the machine frame 110. Accordingly, when mounted on top of the upper tool carrier support portion 113 on the guides 113a, the carrier support slide 151 is configured to be moved horizontally on and along the guides 113a in the Z-axis direction. On the other hand, when mounted in a hanging state at the overhanging lower tool carrier support portion 114 at the guides 114a, the carrier support slide 151 is configured to be moved horizontally along the guides 113a in the Z-axis direction.

On the front side of the carrier support slide 151 of the tool carrier assembly 150a - 150d, facing the machining area of the machine tool 100, a tool support slide 152 is slidably mounted to the carrier support slide 151. The tool support slide 152 is configured to be moved vertically on and along vertical guides arranged on a front face of the carrier support slide 151 in the X-axis direction.

Furthermore, on the front side of the tool support slide 152 of the tool carrier assembly 150a - 150d, facing the machining area of the machine tool 100, a horizontally arranged tool carrier quill (not depicted) extending from the front side of the tool support slide 152 in a Y-axis direction into the machining area of the machine tool 100 may be provided, to mount a tool/machining unit at the front-side end portion of the tool carrier quill. The tool carrier quill can be mounted to the tool support slide 152 so as to controllably move horizontally in a Y-axis towards the front of the machine tool 100. Furthermore, the tool carrier quill may be configured to further include a rotatably driven B-axis so as to control a rotational movement of the tool mounted to the tool carrier assembly 150a - 150d around the horizontally arranged longitudinal axis of the tool carrier quill, i.e. about a rotational axis extending in the Y-axis direction.

It becomes clear from the explanations above that by assigning the arrangement of work spindles 200a, 200b and milling units 201a, 201b shown in Fig. 1 to the tool carrier assemblies 150a - 150d of the machine tool 100, the degrees of freedom in terms of the linear and rotational movement of the work spindles 200a, 200b and milling units 201a, 201b described in connection with Fig. 1 can be realized. For example, to implement the first work spindle 200a as main spindle, the tool support slide 152 of the first tool carrier assembly 150a can be moved downward in the X-axis direction on the vertical guides of the carrier support slide 151, e.g., until it reaches its lowest position. On the other hand, to implement the second work spindle 200b as counter spindle being arranged coaxially to the main spindle, the tool support slide 152 of the fourth tool carrier assembly 150d can be moved upward in the X-axis direction on the vertical guides of the carrier support slide 151, e.g., until it reaches its highest position. In this way, it is possible to arrange the main spindle and the counter spindle coaxially and opposite each other. Depending on the length of the vertical guides on the carrier support slides 151, the main and counter spindles may additionally be rotated about the respective B-axes of the first and fourth tool carrier assemblies 150a, 150d, to achieve the required position.

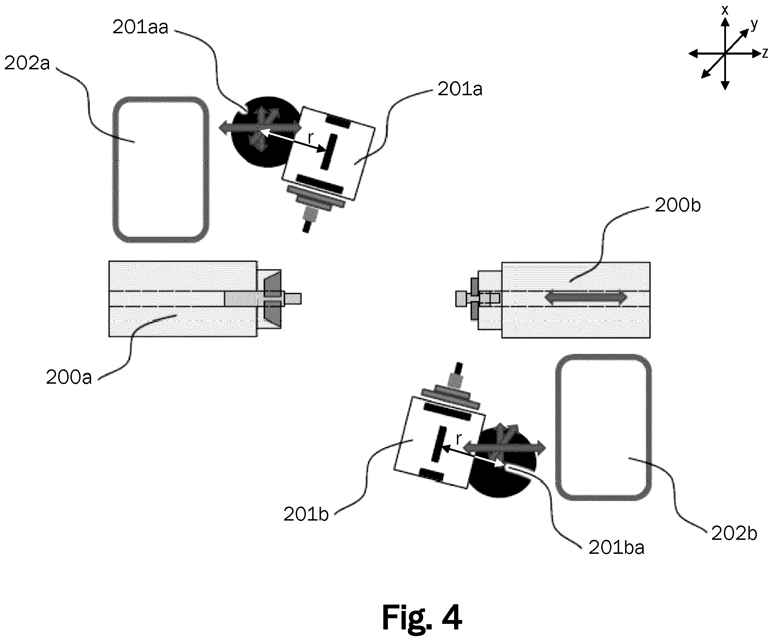

Fig. 4 exemplarily shows an arrangement of work spindles and milling units according to another exemplary embodiment of the invention. The depicted arrangement differs from that shown in Fig. 1 by comprising a first and a second work spindle 200a, 200b being movable only in the Z-axis direction The first work spindle 200a depicted on the left side of Fig. 4 may serve as a main spindle and the second work spindle 200b depicted on the right side of Fig. 4 may serve as a counter spindle.

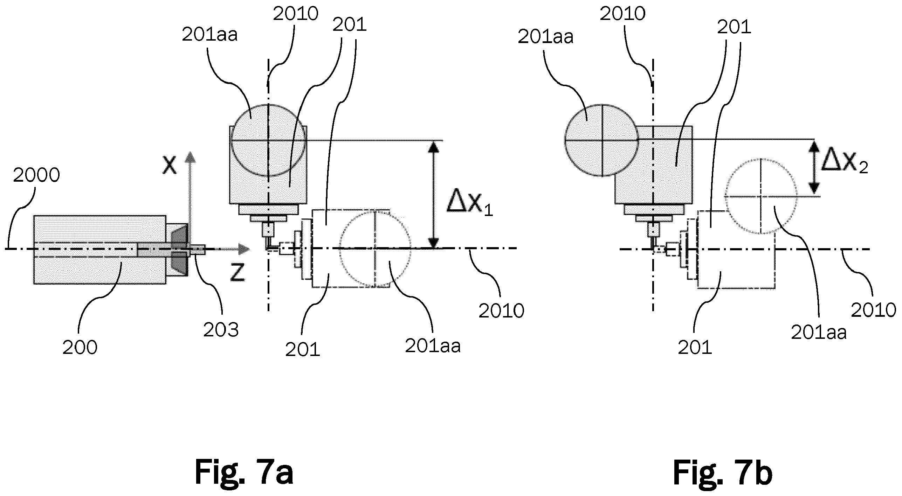

Additionally, B-axes 201aa, 201ba of the first and second milling units 201a, 201b are arranged so as to not intersect with a rotation axis of the respective milling unit 201a, 201b (i.e. eccentric arrangement of the milling units; preferably only the lower installed milling unit is eccentric arranged, for improved accessibility and keeping the machine axis or machining axis od th spindle closer to the workshop floor). Therefore, each of the first and the second milling units 201a, 201b may rotate about the corresponding B-axis 201aa, 201ba on a radius r distant from the latter. In this way, a rotation of each milling unit 201a, 201b about its B axis 201aa, 201ba simultaneously moves the latter in the direction of the X axis as described below in connection with Figs. 7a and 7b.

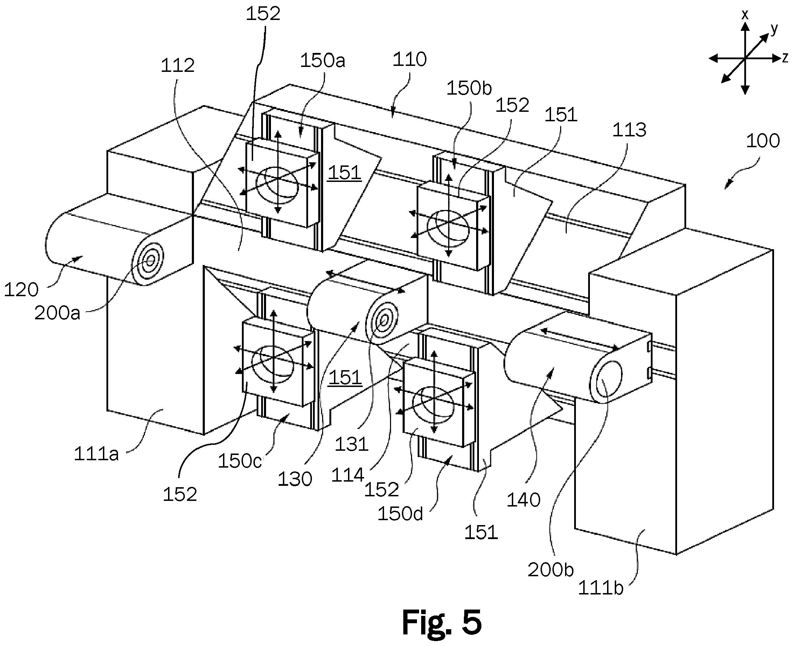

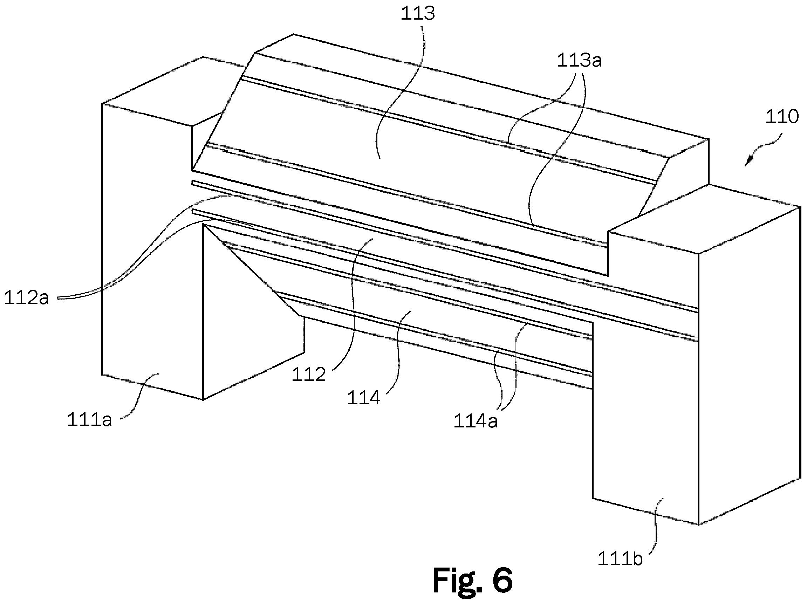

Fig. 5 exemplarily shows a machine tool 100 on which the arrangement of spindles and milling depicted in Fig. 4 can be applied, and Fig. 6 exemplarily shows a schematic perspective view of its machine frame 110.

The depicted machine tool 100 is identical to the machine tool 100 shown in Fig. 2 except that the machine frame 110 includes a spindle support portion 112, formed at its front between the upper support portion 113 and the lower support portion 114, which extends horizontally between the two machine stand portions 111a and 111b. On/at the spindle support portion 112 a main spindle carrier 120 carrying a main spindle 200a, a counter spindle carrier 140 carrying a counter spindle 200b and an auxiliary spindle carrier 130 carrying an auxiliary spindle 131 are arranged. The spindle support portion 112 has a vertically arranged front surface, on which horizontally extending guides 112a are applied for slidably supporting the auxiliary spindle carrier 130 and the counter spindle carrier 140 in the Z-axis direction.

The workpiece-carrying main spindle 200a supported by the main spindle carrier 120 is configured to receive an elongated workpiece, such as a bar, and drive a rotation of the received workpiece around the spindle axis of the main spindle 200a. In the depicted example, the main spindle 200a is arranged with its spindle axis extending in the horizontal direction (Z-axis direction).

The counter-spindle carrier 140 may be slidably mounted to the spindle support portion 112 on the guides 112a. The machine frame 110 carries the counter-spindle carrier 140 which includes the workpiece-carrying counter spindle 200b being configured to receive an elongated workpiece, such as a bar, and drive a rotation of the received workpiece around the spindle axis of the counter spindle 200b. Exemplarily, the counter spindle 200b is arranged with its spindle axis extending in the horizontal direction (Z-axis direction).

In the depicted example, the counter spindle 200b is arranged opposing the main spindle 200a with its spindle axis extending in the horizontal direction coaxially arranged with respect to the spindle axis of the main spindle 200a. Accordingly, the counter spindle 200b can be moved horizontally towards the main spindle 200a to receive the workpiece received in the main spindle 200a to take over the workpiece from the main spindle 200a, e.g. for allowing to machine the rear ends of the workpiece.

Further exemplarily, an optional auxiliary spindle carrier 130 is slidably mounted to the spindle support portion 112 between the main spindle carrier 120 and the counter-spindle carrier 140, guided horizontally on the guides 112a on the spindle support portion 112, i.e. on the same guides 112a which support the counter spindle carried 130.

The machine frame 110 carries the optional auxiliary spindle carrier 130 which includes (or at least supports) an auxiliary spindle 131 being configured to receive an elongated workpiece, such as a bar, and support and/or guide a rotation of the received workpiece around the guide rotation axis of the auxiliary spindle 131. Exemplarily, the auxiliary spindle 131 is arranged with its guide rotation axis (auxiliary spindle axis) extending in the horizontal direction (Z-axis direction). The auxiliary spindle 131 can act as a spindle that clamps/holds a workpiece and drives rotation of the workpiece and can also act as a rotary guide bush that guides rotation of a workpiece clamped in one of or both of the main and counter spindles.

Moreover, the auxiliary spindle 131 can be moved horizontally in the range in between the main spindle 200a and the counter spindle 200b to take over the workpiece received in the main spindle 200a, to guide and/or support it, e.g. to prevent bending of the workpiece due to a force applied by the tool or to receive the workpiece received in the counter spindle 200b and to guide and/or support it, e.g. to prevent bending of the workpiece due to a force applied by the tool.

It is clear, that the functionality of the main, counter and auxiliary spindle described above is also given in case the respective work spindles 200a, 131, 200b are mounted on a tool carrier assembly 150a - 150d as described in connection with Fig. 2 instead of being mounted on a specific spindle carrier 120, 130, 140.

Fig. 7a and 7b exemplary show a comparison between a required traverse path in X-axis direction of a conventional milling unit and the milling unit shown in Fig. 4. In this context, Fig. 7a depicts a horizontally arranged work spindle 200 with a workpiece 203 whose spindle axis 2000 extends in Z-axis direction. A milling tool 201is disposed relative to the work spindle 200a, 200b in a first and a second position, wherein the first position is indicated by depicting the milling unit 201 in solid lines and the second position by depicting the milling unit 201 in dotted lines.

The milling unit 200 depicted in Fig. 7a has a B-axis 201aa that intersects with a rotation axis 2010 of the milling unit 201. In the first position, the milling unit 201 is arranged perpendicular to the work spindle 200, which means that its rotation axis 2010 extends in X-axis direction. The first position may be used to machine an outer surface of the workpiece by the milling unit 201.

In the second position, the milling unit 201 is arranged coaxial to the work spindle 200, which means that its rotation axis 2010 extends in Z-axis direction along the same axis as that of the work spindle 200. The second position may be used to machine a front end of the workpiece by the milling unit 201. To change the position of the milling unit 201 from the first to the second position, the latter has to be rotated by 90 degrees and moved linearly in X-axis direction by a distance Δx₁.

In contrast, Fig. 7b depicts a milling unit 201 having a B-axis 201aa that does not intersect with a rotation axis 2010 of the milling unit 201. In this case, the B-axis is arranged a predetermined distance apart from the rotation axis 2010 of the milling unit 201, which means that the milling unit 201 rotates about the B-axis 201aa on a radius r having the predetermined distance to the rotation axis 2010 of the milling unit 201. When changing the position of the milling unit 201 from the first to the second position, the milling unit 201 may first rotate about the B-axis 201aa by 90 degrees. In doing so, the milling unit 201 is already moved in X-axis direction by a certain distance. Thus, the additional distance Δx₂ by which the milling unit 201 has to be moved in X-axis direction to reach the second position is shorter than the distance Δx₁. Thus, a traverse path of the milling tool 201 in X-axis direction, e.g., that of the tool support slide 152 shown in Fig. 5, can be shortened, in order to provide a compact machine tool 100.

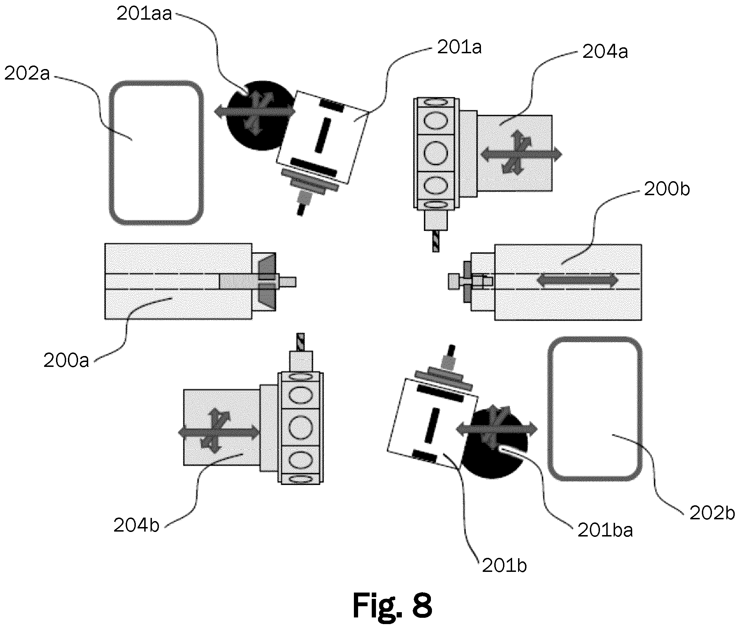

Fig. 8 exemplarily shows an arrangement of work spindles and milling units according to yet one another exemplary embodiment of the invention. The depicted arrangement differs from that shown in Fig. 4 by comprising two additional turrets 204a, 204b. A first turret 204a is arranged above the second work spindle 200b depicted on the right side of Fig. 8, wherein the second work spindle 200b may serve as a counter spindle. A second turret 204b is arranged below the first work spindle 200b depicted on the left side of Fig. 8, wherein the first work spindle 200b may serve as a main spindle. The first and second turrets 204a, 204b may be equipped with a plurality of different tools such as drills, milling cutters, chisels etc.. The additional turrets 204a, 204b allow to perform additional machining steps in one machining pass, so that the efficiency of the machine tool 100 can be further improved.

The arrangement of work spindles, milling tools and turrets shown in Fig. 8 can be applied to the machine unit 100 of Fig.5 which provides a spindle support portion 112 with specific spindle carriers 120, 130, 140 for accommodating the work spindles 200a, 200b, 131. In this case, the tool carrier assemblies 150a - 150d of the upper and lower tool carrier portions 113, 114 are reserved for the first and the second milling units 201a, 201b and the additional turrets 204a, 204b supporting the latter.

While certain exemplary aspects have been described above, it is to be understood that such aspects are merely illustrative of and are not restrictive on the broad invention, and that the exemplary aspects are not limited to the specific constructions and arrangements shown and described above, since various other changes, combinations, omissions, modifications and substitutions, in addition to those set forth in the above paragraphs, are possible.

Those skilled in the art will appreciate that various adaptations, modifications, and/or combination of the just described aspects can be configured. Therefore, it is to be understood that, further aspects may be practiced other than as specifically described herein. Those skilled in the art will also appreciate, in view of this disclosure, that different aspects described herein may be combined to form other aspects of the present disclosure.

## Claims

1. Machine tool, in particular a lathe, comprising
a machine frame (110) having an upper tool carrier support portion (113) and a lower tool carrier support portion (114), each of the upper tool carrier support portion (113) and the lower tool carrier support portion (114) accommodating at least one linear movable tool carrier assembly configured to carry a milling unit;
a first milling unit (201a) arranged on a tool carrier assembly of the upper tool carrier support portion;
a second milling unit (201b) arranged on a tool carrier assembly of the lower tool carrier support portion;
at least one work spindle (200a, 200b) provided to receive a workpiece (203a, 203b); wherein the first and the second milling units (201a, 201b) are configured to jointly machine the workpiece (203a, 203b) received by the at least one work spindle (200a, 200b).

2. Machine tool according to claim 1, wherein two or more or preferably each tool carrier assembly accommodated by the upper and lower tool carrier support portions and each preferably having a milling unit, is configured to independently move a tool carried thereon in one or more linear directions, including at least one of a Z-axis direction extending horizontally in a direction parallel to a main extending direction of the machine frame, an X-axis direction extending vertically in a direction perpendicular to the main extending direction of the machine frame, and a Y-axis direction extending horizontally in a direction transverse to the main extending direction of the machine frame.

3. Machine tool according to claim 1 or 2, wherein one or more or each of the tool carrier assemblies accommodated by the upper and lower tool carrier support portions is configured to rotate a tool carried thereon about a B-axis extending transversely to the main extending direction of the machine frame.

4. Machine tool according to at least one of the claims 1 to 3, wherein the at least one work spindle is arranged directly on at least one of the at least two tool carrier assemblies of the upper tool carrier support portion or the lower tool carrier support portion to be movable with the tool carrier assembly.

5. Machine tool according to claim 4 wherein a first work spindle, which preferably is a main spindle, is arranged on a first tool carrier assembly accommodated by the upper tool carrier support portion and a second work spindle, which preferably is a counter-spindle, is arranged on a second tool carrier assembly accommodated by the lower tool carrier support portion.

6. Machine tool according to at least one of the preceding claims, wherein the machine frame has a spindle support portion arranged between the upper and the lower tool carrier support portions, the spindle support portion accommodating at least one spindle carrier on which the at least one work spindle is arranged.

7. Machine tool according to claim 6, wherein the tool carrier assembly on which the first milling unit is arranged is configured to rotate the first milling unit about a first B-axis extending transversely to the main extending direction of the machine frame, and the tool carrier assembly on which the second milling unit is arranged is configured to rotate the second milling unit about a second B-axis extending transversely to the main extending direction of the machine frame, wherein the first and the second B-axes are arranged so as to not intersect with a rotation axis of the respective milling unit.

8. Machine tool according to claim 7, wherein the first B-axis is arranged at a first predetermined distance from the rotation axis of the first milling unit, and the second B-axis is arranged at a second predetermined distance from the rotation axis of the second milling unit.

9. Machine tool according to at least one of the claims 6 to 8, wherein at least one turret and/or at least one further milling unit is arranged on at least one of the at least two tool carrier assemblies of the upper tool carrier support portion or the lower tool carrier support portion.

10. Machine tool according to at least one of the claims 6 to 9, wherein the at least one work spindle has a horizontally arranged spindle axis.

11. Machine tool according to at least one of the claims 6 to 10, wherein the at least one spindle carrier is configured to move the at least one work spindle in a Z-axis direction extending horizontally in a direction parallel to the main extending direction of the machine frame.

12. Machine tool according to at least one of the claims 6 to 11, wherein a main spindle and a counter spindle are each arranged on a spindle carrier accommodated by the spindle support portion, the main spindle and the counter spindle facing each other.

13. Machine tool according to claim 12, wherein the main spindle and the counter spindle each have a horizontally arranged spindle axis, the axis of the counter spindle being arranged coaxially with the spindle axis of the main spindle.

14. A method for machining workpieces using a machine tool with a first and second milling unit of any of the preceding claims, the method comprising at least the step of jointly machining the workpiece received by the at least one spindle and/or pivoting at least one tool carrier about a B-axis to achieve a B-axis movement.
